Europäisches Patentamt

European Patent Office

Office européen des brevets

(11) Veröffentlichungsnummer: **0 346 319**
A1

# (12) EUROPÄISCHE PATENTANMELDUNG

(21) Anmeldenummer: **89890143.4**

(22) Anmeldetag: **17.05.89**

(51) Int. Cl.⁴: **A 01 B 61/04**

(30) Priorität: **10.06.88 AT 1507/88**

(43) Veröffentlichungstag der Anmeldung:
**13.12.89 Patentblatt 89/50**

(84) Benannte Vertragsstaaten: **AT DE ES FR GB**

(71) Anmelder: **VOGEL & NOOT LANDMASCHINENFABRIK GESELLSCHAFT M.B.H.**
**A-8661 Wartberg (AT)**

(72) Erfinder: **Zeilbauer, Viktor**
**Wartberg 415**
**A-8661 Wartberg (AT)**

(74) Vertreter: **Atzwanger, Richard, Dipl.-Ing.**
**Mariahilfer Strasse 1c**
**A-1060 Wien (AT)**

(54) **Pfluganordnung.**

(57) Pfluganordnung mit einer mit einem Zugfahrzeug kuppelbaren Trageinrichtung (1) für einen mit mindestens einer Pflugschar (7) ausgebildeten Pflugbaum (3) der gegenüber der Trageinrichtung (1) entgegen der Wirkung einer Rückstelleinrichtung (10) ausschwenkbar ist, wobei der Pflugbaum (3) durch ein Rohr (4) gebildet ist, das mit der Trageinrichtung (1) über ein Gelenk (2) verbunden ist und das von einer Zugstange (5) durchsetzt ist, deren eines Ende an der Trageinrichtung (1) angelenkt ist und an deren anderes Ende eine Rückstelleinrichtung (10) welche zwischen dem Rohr (4) und der Zugstange (5) wirkt, angreift. Dabei ist zwischen den freien Enden des Rohres (4) und der Zugstange (5) eine Überlastsicherung (8, 22, 23, 24) angeordnet.

FIG. 4

EP 0 346 319 A1

**Beschreibung**

**Pfluganordnung**

Die Erfindung betrifft eine Pfluganordnung mit einer mit einem Zugfahrzeug kuppelbaren Trageinrichtung für einen mit mindestens einer Pflugschar ausgebildeten Pflugbaum, der gegenüber der Trageinrichtung entgegen der Wirkung einer Rückstelleinrichtung ausschwenkbar ist, wobei der Pflugbaum durch ein Rohr gebildet ist, das mit der Trageinrichtung über ein Gelenk verbunden ist und das von einer Zugstange durchsetzt ist, deren eines Ende an der Trageinrichtung angelenkt ist, und an deren anderes Ende die Rückstelleinrichtung 1 welche zwischen dem Rohr und der Zugstange wirkt, angreift.

Eine derartige Pfluganordnung, welche aus der AT-PS 322 250 bekannt ist, ermöglicht bei Auftreffen der Pflugschar auf ein Hindernis ein Ausschwenken des die Pflugschar tragenden Pflugbaumes, wodurch die Pflugschar über dieses Hindernis hinweg gelangt. In der Folge wird der Pflugbaum unter Wirkung der Rückstelleinrichtung wieder in seine Arbeitslage zurückverstellt. Diese bekannte Pfluganordnung entspricht jedoch deshalb nicht den Anforderungen, da die Ausschwenkbarkeit des Pflugbaumes mit einem bestimmten Winkel, welcher durch die Dimensionierung der Rückstelleinrichtung bestimmt ist, begrenzt ist. Es ist zwar möglich, den Schwenkwinkel beliebig zu vergrößern, jedoch bedingt dies eine Verstärkung der Rückstelleinrichtung was im Hinblick auf die üblichen Einsatzbedingungen einen ungerechtfertigten technischen Aufwand darstellt.

Demnach wird die Rückstelleinrichtung so dimensioniert, daß eine solche Ausschwenkung des Pflugbaumes ermöglicht ist, welche in den meisten der auftretenden Fällen ausreicht. Soferne allerdings ein derart großes Hindernis auftritt, daß die maximale Ausschwenkung des Pflugbaumes nicht hinreicht, um dieses zu überfahren, werden hierdurch Deformationen und andere Beschädigungen der Pfluganordnung verursacht, welche hohe Reparaturkosten bedingen.

Der gegenständlichen Erfindung liegt demnach die Aufgabe zugrunde, eine Pfluganordnung zu schaffen, bei welcher einerseits eine Überdimensionierung der Rückstelleinrichtung vermieden ist und bei welcher andererseits auch bei Auftreten von großen Hindernissen eine Beschädigung der Pfluganordnung ausgeschlossen ist. Dies wird erfindungsgemäß dadurch erzielt, daß zwischen den freien Enden des Rohres und der Zugstange eine Überlastsicherung an- geordnet ist. Vorzugsweise ist am freien Ende der Zugstange ein Gehäuse angeordnet, das von der Zugstange durchsetzt ist, wobei sich an der äußeren Stirnseite des Gehäuses eine Scherplatte befindet, an welche ein Anschlag der Zugstange anliegt.

Soferne der Pflugkörper auf ein Hindernis auftrifft, das auch durch die maximale Ausschwenkung des Pflugbaumes nicht überwunden werden kann, spricht die Überlastsicherung dadurch an, daß der Anschlag die Scherplatte durchschert, wodurch eine weitere Ausschwenkung des Pflugbaumes gegenüber der Trageinrichtung ermöglicht wird. Durch die anmeldungsgemäße Einrichtung werden somit Beschädigungen der Pfluganordnung ausgeschlossen. Für den weiteren Betrieb ist es dann nur erforderlich, die Zugstange in ihre Arbeitslage zurückzuverstellen und in das Gehäuse eine neue Scherplatte einzusetzen.

Vorzugsweise ist die Rückstelleinrichtung als zwischen dem Rohr und dem Gehäuse wirkende Druckfeder ausgebildet. Nach einer weiters bevorzugten Ausführungsform ist am Rohr ein Lenker gelagert, welcher auf der Zugstange zwischen dem Rohr und dem Gehäuse verschiebbar ist, wobei die Druckfeder zwischen dem Rohr und dem freien Ende des Lenkers wirkt. Hiermit ist eine Anordnung geschaffen, durch welche als Rückstelleinrichtung ein sich angenähert parallel zum Pflugbaum erstreckendes Paket von Blattfedern verwendet werden kann, durch welches den Anforderungen an eine derartige Rückstelleinrichtung in optimaler Weise entsprochen wird. Dabei kann auf der Zugstange eine Lagereinrichtung für den Lenker geführt sein, welche an das Gehäuse anliegt und welche mit Lagerzapfen für den Lenker ausgebildet ist.

Vorzugsweise ist weiters der Anschlag durch einen von der Zugstange getragenen und an die Scherplatte anliegenden Schnittstempel gebildet, der auf der Zugstange mittels mindestens einer auf ein Gewinde der Zugstange aufschraubbaren Mutter befestigt ist. Hierdurch kann in das Gehäuse in einfacher Weise eine neue Scherplatte eingesetzt werden.

Der Gegenstand der Erfindung ist nachstehend anhand eines in der Zeichnung dargestellten Ausführungsbeispieles näher erläutert. Es zeigen:

Fig. 1 eine anmeldungsgemäße Pfluganordnung in Seitenansicht,

Fig. 2 die bei einer derartigen Pfluganordnung verwendete Rückstelleinrichtung in der Arbeitslage des Pflugbaumes, in Richtung des Pfeiles A der Fig. 1 gesehen,

Fig. 3 die Rückstelleinrichtung nach der Ausschwenkung des Pflugbaumes, in Richtung des Pfeiles B der Fig. 1 gesehen,

Fig. 4 ein Detail der Fig. 3, in gegenüber dieser vergrößerter Darstellung, und

Fig. 5 einen Schnitt nach der Linie V-V der Fig. 4.

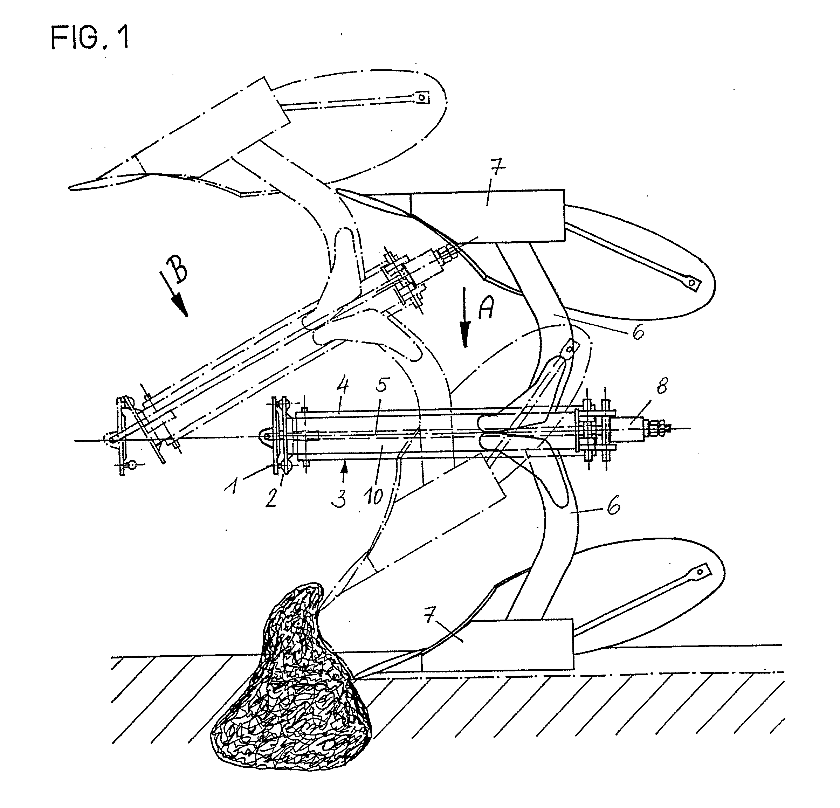

Wie aus Fig. 1 ersichtlich ist, besteht eine anmeldungsgemäße Pflugeinrichtung aus einer Trageinrichtung 1, an welchermittels eines Gelenkes 2 ein Pflugbaum 3 befestigt ist, der mittels an diesem befestigten Grindeln 6 Pflugkörper 7 trägt. Der Pflugbaum 3 ist durch ein Rohr 4 gebildet, welches von einer Zugstange 5 durchsetzt ist. Das eine Ende der Zugstange 5 ist am Traggestell 1 angelenkt und das andere, im Bereich des freien Endes des Pflugbaumes 3 befindliche Ende der Zugstange 5 durchsetzt ein Gehäuse 8. Zwischen dem einen Ende des Rohres 4 und dem gegenüberliegenden Ende der Zugstange 5 wirkt eine als Federpaket 10 ausgebildete Druckfeder

Soferne der im Boden geführte Pflugkörper 7 auf ein Hindernis, z.B. auf einen großen Stein 11, aufläuft wird der Pflugbaum 3 über das Gelenk 2 entgegen der Wirkung der Druckfeder 10 gegenüber der Trageinrichtung 1 verschwenkt wodurch der Pflugkörper 7 über das Hindernis 11 hinweg gelangt. Die ausgeschwenkte Lage der Pfluganordnung ist in Fig. 1 strichpunktiert dargestellt. Nach dem Überfahren des Hindernisses 11 wird die Pfluganordnung mittels der Rückstellfeder 10 wieder zurückverschwenkt, wodurch der Pflugkörper 7 in seine Arbeitslage gelangt.

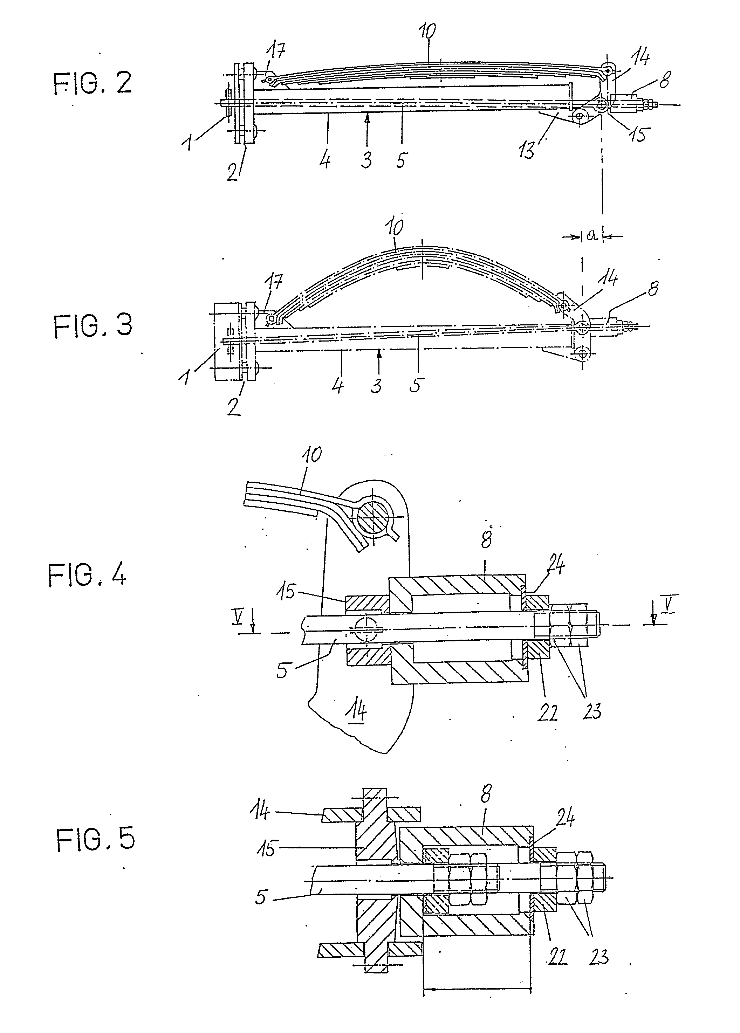

Wie weiters aus den Fig. 2 und 3 ersichtlich ist, ist am freien Ende des Rohres 4 ein Ansatz 13 vorgesehen, an welchem ein Hebel 14 angelenkt ist, welcher auf einer gegenüber der Zugstange 5 verschiebbaren Trageinrichtung 15 gelagert ist. Die Blattfeder 10 befindet sich zwischen dem freien Ende dieses Hebels 14 und einem am anderen Ende des Rohres 4 vorgesehenen weiteren Ansatz 17 des Rohres 4. Sobald der Pflugkörper 7 auf ein Hindernis 11 aufläuft, wodurch der Pflugbaum 3 gegenüber der Trageinrichtung 1 verschwenkt wird, wird auch die das Tragrohr 4 durchsetzende Zugstange 5 verschwenkt.Hierdurch wird ihr freies Ende gegenüber dem freien Ende des Tragrohres 4 um die Länge a verschoben, wodurch der Lenker 14 verschwenkt und das Federpaket 10 gespannt wird. Sobald der Pflugkörper 7 das Hindernis 11 überfahren hat, wird der Pflugbaum 3 durch das Federpaket 10 wieder in seine Arbeitslage zurückverschwenkt. Der Schwenkwinkel des Pflugbaumes 3 gegenüber der Trageinrichtung 1 ist dadurch begrenzt, daß der Lenker 14 am freien Ende des Tragrohres 4 zur Anlage kommt. Dieser Schwenkwinkel ist mit der maximalen Belastbarkeit der Blattfeder 10 bestimmt.

Für den Fall, daß bei Auftreten eines sehr großen Hindernisses dieser Schwenkwinkel nicht ausreicht, um den Pflugkörper 7 über dieses Hindernis hinweg führen zu können, ist weiters im Bereich des freien Endes der Zugstange 5 eine anhand der Fig. 4 und 5 erläuterte Überlastsicherung vorgesehen. Diese Überlastsicherung besteht aus dem Gehäuse 8, das vom freien Ende der Zugstange 5 durchsetzt ist. Am Ende der Zugstange 5 befindet sich ein durch zwei Muttern 23 in seiner Lage ge haltener Scherring 22, welcher an eine am freien Ende des Gehäuses 8 befindliche Scherplatte 24 anliegt.

Soferne aufgrund eines sehr großen Hindernisses die Verschwenkung des Pflugbaumes 3 nicht hinreicht, um dieses zu überfahren, sondern vielmehr weiterhin auf den Pflugbaum3ein Drehmoment ausgeübt wird, wodurch auch die Zugstange 5 einem großen Zug unterliegt, wird die Scherplatte 24 durch den Scherring 22 durchbrochen, wie dies in Fig. 5 der Zeichnung strichliert dargestellt ist. Hierdurch wird eine weitere Auslenkung des Pflugbaumes 3 ermöglicht.

Um nach Überfahren des Hindernisses eine Wiederaufnahme des Pflugbetriebes zu ermöglichen, braucht nur der Pflugbaum 3 in seine Arbeitslage zurückverschwenkt zu werden, wodurch das Ende der Zugstange 5 das Gehäuse wiederum vollständig durchsetzt. Sobald nach Entfernung der Muttern 23 und des Scherringes 22 in das Gehäuse 8 eine neue Scherplatte 24 eingesetzt wurde, ist die ursprüngliche Funktionsfähigkeit wieder hergestellt.

## Patentansprüche

1. Pfluganordnung mit einer mit einem Zugfahrzeug kuppelbaren Trageinrichtung für einen mit mindestens einer Pflugschar ausgebildeten Pflugbaum, der gegenüber der Trageinrichtung entgegen der Wirkung einer Rückstelleinrichtung ausschwenkbar ist, wobei der Pflugbaum durch ein Rohr gebildet ist, das mit der Trageinrichtung über ein Gelenk verbunden ist und das von einer Zugstange durchsetzt ist, deren eines Ende an der Trageinrichtung angelenkt ist und an deren anderes Ende eine Rückstelleinrichtung, welche zwischen dem Rohr und der Zugstange wirkt, angreift, dadurch gekennzeichnet, daß zwischen den freien Enden des Rohres (4) und der Zugstange (5) eine Überlastsicherung (8, 22, 23, 24) angeordnet ist.

2. Pfluganordnung nach Patentanspruch 1, dadurch gekennzeichnet, daß am freien Ende der Zugstange (5) ein Gehäuse (8) vorgesehen ist, das von der Zugstange (5) durchsetzt ist, wobei an der äußeren Stirnseite des Gehäuses (8) eine Scherplatte (24) angeordnet ist, an welche ein Anschlag (22) der Zugstange (5) anliegt.

3. Pfluganordnung nach einem der Patentansprüche 1 und 2, dadurch gekennzeichnet, daß die Rückstelleinrichtung in an sich bekannter Weise als zwischen dem Rohr (4) und dem Gehäuse (8) wirkende Druckfeder (10) ausgebildet ist.

4. Pfluganordnung nach Patentanspruch 3, dadurch gekennzeichnet, daß am Rohr (4) in an sich bekannter Weise ein Lenker (14) angelenkt ist, welcher auf der Zugstange (5) zwischen dem Rohr (4) und dem Gehäuse (8) verschiebbar gelagert ist, wobei die Druckfeder (10) zwischen dem Rohr (4) und dem freien Ende des Lenkers (14) wirkt.

5. Pfluganordnung nach einem der Patentansprüche 1 bis 4, dadurch gekennzeichnet, daß auf der Zugstange (5) eine Lagereinrichtung (15) für den Lenker (14) geführt ist, welche an das Gehäuse (8) anliegt und welche mit Lagerzapfen für den Lenker (14) ausgebildet ist.

6. Pfluganordnung nach einem der Patentansprüche 1 bis 5, dadurch gekennzeichnet, daß der Anschlag durch einen von der Zugstange (5) getragenen und an die Scherplatte (24) anliegenden Ring (22) gebildet ist, dessen achsiale Lage mittels mindestens einer auf ein Gewinde der Zugstange (5) aufschraubbaren Mutter (23) bestimmt ist.

7. Pfluganordnung nach Patentanspruch 5, dadurch gekennzeichnet, daß die Lagereinrichtung für den Lenker (14) durch eine auf der Zugstange (5) verschiebbare Platte (15), welche mit mindestens einem Lagerzapfen für den Lenker (14) versehen ist, gebildet ist.

EP 0 346 319 A1

FIG. 1

FIG. 2

FIG. 3

FIG. 4

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,D | GB-A-1352644 (KVERNELANDS FABRIK A/S) <br> * Seite 4, Zeile 10 – Zeile 19; Figuren 5, 6 * <br> & AT-B-322 250 | 1, 3, 4 | A01B61/04 |
| Y | | 2 | |
| A | | 5, 7 | |
| | --- | | |
| Y | EP-A-117291 (SCHILLING) <br> * Seite 6, Zeile 19 – Seite 7, Zeile 18; Figuren 1, 2 * | 2 | |
| | --- | | |
| A | EP-A-194168 (MESLET) | | |
| | --- | | |
| A | FR-A-2385309 (ETABLISSEMENTS MONERIE & CIE) | | |
| | ----- | | |

**RECHERCHIERTE SACHGEBIETE (Int. Cl.4)**

A01B
F16P

Der vorliegende Recherchenbericht wurde für alle Patentansprüche erstellt

| Recherchenort | Abschlußdatum der Recherche | Prüfer |
|---|---|---|
| DEN HAAG | 04 SEPTEMBER 1989 | VON ARX V.U. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..............
& : Mitglied der gleichen Patentfamilie, übereinstimmendes Dokument